# EUROPÄISCHE PATENTSCHRIFT

(11) **EP 2 546 615 B1**
(45) Veröffentlichungstag und Bekanntmachung des Hinweises auf die Patenterteilung: **03.12.2014**
(21) Anmeldenummer: 12175400.6
(22) Anmeldetag: 06.07.2012
(51) Int. Cl.: G01D 11/30, G01D 11/24, B60R 19/48

(54) **Befestigungsvorrichtung für ein Bauteil eines Kraftfahrzeugs**
Mounting device for a component of a motor vehicle
Dispositif de fixation pour un composant d'un véhicule automobile

(30) Priorität: 14.07.2011 DE 102011051840
(43) Veröffentlichungstag der Anmeldung: 16.01.2013
(73) Patentinhaber: Faurecia Exteriors GmbH, 91781 Weissenburg (DE)
(72) Erfinder: Danev, Dimitar, 71272 Renningen (DE); Wachter, Erwin, 91792 Ellingen-Stopfenheim (DE)
(74) Vertreter: Tischner, Oliver

(56) Entgegenhaltungen:
- WO-A1-2006/122616
- DE-A1- 10 337 760
- DE-A1-102005 011 953

## Beschreibung

Die Erfindung bezieht sich auf eine Befestigungsvorrichtung für ein Bauteil, insb. für einen Sensor eines Kraftfahrzeugs, nach dem Oberbegriff des Anspruchs 1.

Aus der DE 20 2008 006 499 U1 ist ein Trägerelement zur Aufnahme eines Sensors in einem Kraftfahrzeug bekannt. Das Trägerelement weist hierzu Befestigungselemente in Form von Clipsen auf, die mit dem Funktionselement eine Clips - oder Rastverbindung bilden.

Die DE 10 2005 011 953 A1 und WO 2006/122616 A1 offenbaren Sensorhalter mit Haltebügel.

Die DE 103 37 760 A1 betrifft eine Sensorhalterung mit den Sensor hinterrastenden Rastzungen.

Aufgabe der Erfindung ist es, eine Befestigungsvorrichtung für ein Bauteil, insb. für einen Sensor in einem Kraftfahrzeug zu schaffen, die eine vereinfachte Montage und einen leichten Austausch von Bauteilen gewährleistet. Darüber hinaus soll ein abgesicherter Halt des Bauteils über die Vorrichtung erreicht werden.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass durch die Befestigung des Bauteils am Halter durch Clipse ein leichtes Austauschen dieser Bauteile durch Lösen der Verclipsung und eine Absicherung der Verclipsung durch ein Sicherungselement erreicht wird. Dies wird erfindungsgemäß erzielt in dem zu beiden Seiten des Bauteils als Befestigungselement Clipse randseitig am Halter angeordnet sind, die mit endseitig angeformten hakenförmigen Vorsprüngen das Bauteil seitlich übergreifen. Zur Absicherung des Bauteils im Halter ist mit einem Clips ein Sicherungselement in Form eines Riegels oder Bügels verbunden, das um eine Schwenkachse von einer Öffnungsstellung in eine Sicherungsstellung verschwenkbar und auf einen gegenüber stehenden Clips verrastbar ist.

Insbesondere besteht das Sicherungselement aus dem zungenförmigen Riegel oder Bügel, welcher sich quer über das Bauteil erstreckt und am Bauteil anliegt und über eine Schwenkachse des Gelenks in die Sicherungsstellung auf den gegenüberstehenden Clips verschwenkbar ist.

Ferner ist nach der Erfindung vorgesehen, dass der Riegel des Sicherungselements eine mit dem Kopf des gegenüberstehenden Clips korrespondierende Öffnung aufweist, die in der Sicherungsstellung den Clipskopf übergreift und mittels eines nach außen vorstehenden hakenförmigen Vorsprungs am Kopf des Clips verrastbar ist.

Weiter ist nach der Erfindung vorgesehen, dass die Clipse vorzugsweise am oberen Rand von seitlichen Wandungen des Halters angeordnet sind und die hakenförmigen Vorsprünge nach innen ragend gegenüberstehend liegen und das Bauteil obenseitig quer übergreifen, wobei die hakenförmigen Vorsprünge am Clipskopf zur Aufnahme des Riegels in der Sicherungsstellung am freien oberen Ende des Clips angeordnet ist. Mit dieser Anordnung der Clipse am oberen Rand der Wandungen des Halters sowie der das Bauteil quer übergreifenden hakenförmigen Vorsprünge der Clipse, ist ein sicherer umklammerter Halt des Bauteils im Halter sichergestellt. Die Verclipsung bewirkt, dass das aus dem Riegel bestehende Sicherungselement, welches das Bauteil übergreift, die Clipse gegeneinander vorspannt und somit eine Absicherung gegen die Einwirkung vor Kräften (Gewicht, Vibration, Belastungen im Fahrbetrieb) gewährleistet ist.

Die Handhabung des Sicherungselements ist aufgrund der Schwenkbarkeit über ein Gelenk bzw. über ein Filmgelenk in einfacher weise möglich, so dass die Montage und Demontage des Bauteils, auch an ungünstig gelegenen Einbauorten am Fahrzeug, ohne Aufwand durchgeführt werden kann.

Damit eine Verspannung der Clipse zueinander möglich ist, ist das Sicherungselement entsprechend ausgelegt, d.h. die Öffnung im Sicherungselement ist zum gegenüber stehenden Clip so ausgeführt, dass eine Verspannung erzielbar ist.

Es können nach der Erfindung auch mehrere Clipse am Halter angeordnet sein, damit über die Länge des Bauteils ein weiterer sicherer Halt gegeben ist. Entsprechend können dann auch mehrere Sicherungselemente angeordnet sein.

Damit eine sichere Aufnahme im Halter erzielt wird, ist nach der Erfindung vorgesehen, dass mit Bodenplatten des Halters seitliche Wände verbunden sind, welche zwischen sich das Bauteil aufnehmen und der Halter an einem den Clipsen abgekehrten hinteren Ende eine kastenförmige Aufnahme aufweist, die das Bauteil endseitig umgibt und ein vorderseitiger Endbereich mit einer Einschuböffnung versehen ist, an der mit einem Längsabstand die beiden Clipse und das Sicherungselement angeordnet sind. Durch diese Ausführung des Halters kann das Bauteil durch die Einschuböffnung in das hintere Ende eingesteckt werden und wird in der kastenförmigen Aufnahme gehalten und kann nicht herausfallen. Durch die Anordnung der Clipse und des Sicherungselements im Bereich der Einschuböffnung des Halters ist eine sichere Befestigung des Bauteils im Halter gewährleistet.

Ein Ausführungsbeispiel der Erfindung ist in den Zeichnungen dargestellt und wird im Folgenden näher beschrieben.

Es zeigen:

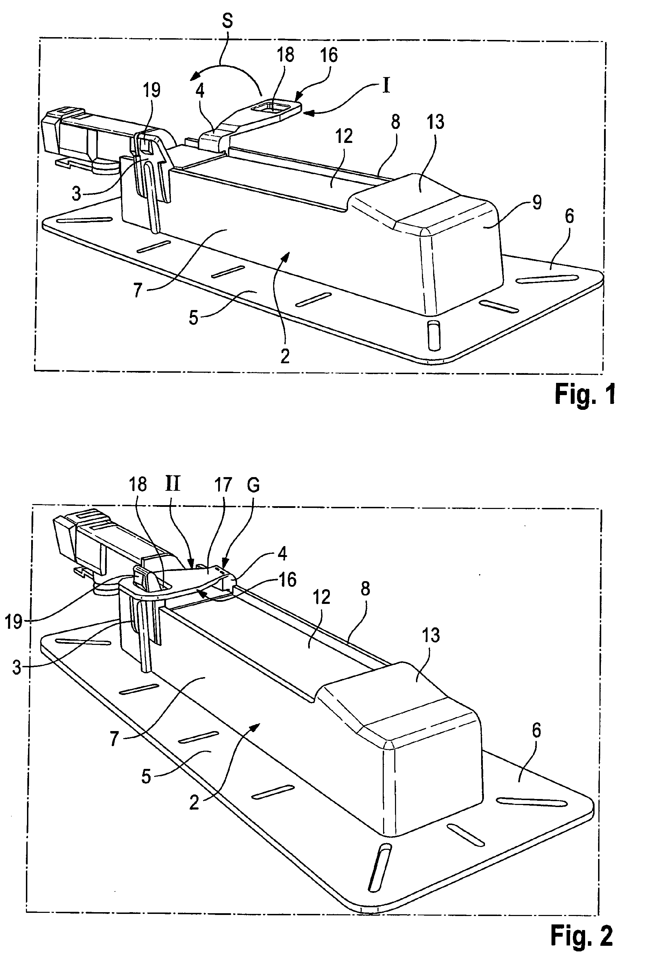

- Fig. 1: eine schaubildliche Darstellung eines Halters für ein Bauteil mit einer aus Clipsen bestehenden Befestigungsvorrichtung mit einem Sicherungselement in einer Öffnungsstellung,
- Fig. 2: eine Ansicht auf den Halter mit eingesetztem Bauteil und dem Sicherungselement in einer Sicherungsstellung,

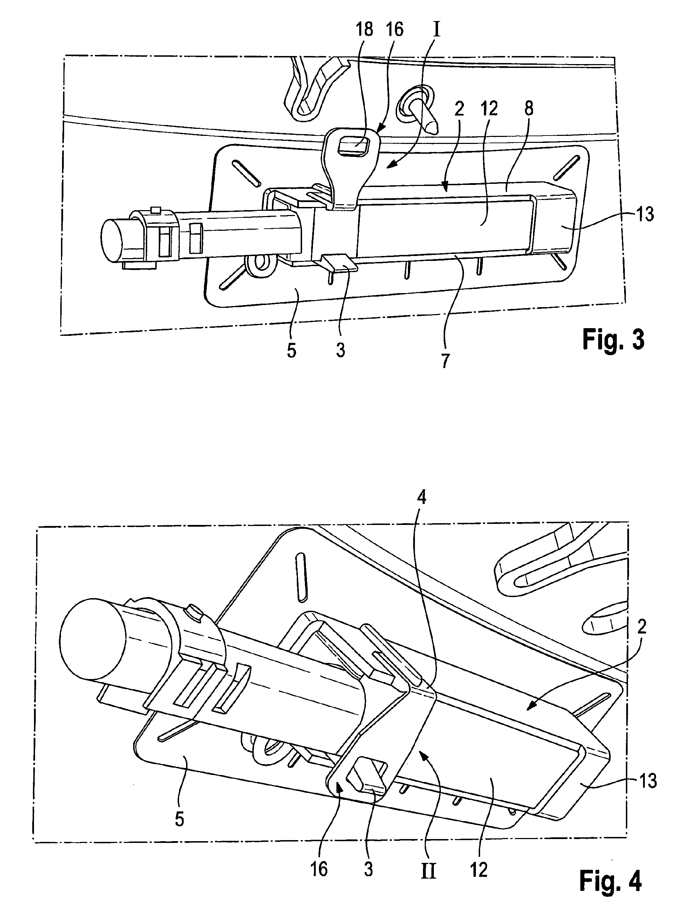

- Fig. 3: eine Ansicht auf das in einer Öffnungsstellung befindliche Sicherungselement,
- Fig. 4: eine Ansicht gemäß Fig. 3 auf das in einer Sicherungsstellung befindliche Sicherungselement,
- Fig. 5: einen Querschnitt durch das im Halter eingesetzte Bauteil sowie die beiden Clipse mit geöffnetem Sicherungselement und
- Fig. 6: einen Querschnitt gemäß Fig. 5 mit geschlossenem Sicherungselement.

Eine Befestigungsvorrichtung 1 für ein Bauteil, insbesondere für einen Sensor eines Kraftfahrzeugs, besteht aus einem Halter 2 in dem das Bauteil 12 beispielsweise ein Sensor über zwei als Befestigungselemente wirkende Clipse 3, 4 eingespannt gehalten wird.

Der Halter 2 weist Bodenplatten 5, 6 auf, die mit dem Fahrzeug verbunden sind und an denen seitliche längs verlaufende aufrechte Wände 7, 8 angeformt sind, zwischen denen das Bauteil 12 gehalten wird. Am hinteren Ende 9 des Halters 2 ist eine kastenförmige Aufnahme 13 für das Bauteil 12 angeordnet, wobei das vordere Ende 10 eine Einschuböffnung 11 für das Bauteil 12 aufweist. Dieses ist in der kastenförmig ausgeführten Aufnahme 13 am hinteren Ende 9 eingesteckt gehalten und mit seinem vorderen Ende 10 zwischen den Clipsen 3 und 4 klemmend angeordnet.

Die Clipse 3, 4 sind zu beiden Seiten des Bauteils 12 vorgesehen und jeweils randseitig an den Wänden 7, 8 des Halters 2 angeformt und weisen am freien Ende nach innen ragende und gegen überstehende hakenförmige Vorsprünge 14, 15 auf, die das Bauteil 12 jeweils seitlich übergreifen. Mit einem Clip 4 ist ein Sicherungselement 16 verbunden, das in einem Gelenk G eine Schwenkachse 17 aufweist und um diese von einer Öffnungsstellung I in eine Sicherungsstellung II und umgekehrt verschwenkbar ist, in der es auf dem gegenüberstehenden Clips 3 angeordnet (Schwenkbewegung S) und mit diesem verrastbar ist.

Das Sicherungselement 16 besteht vorzugsweise aus einem zungenförmigen Riegel oder Bügel, der das Gelenk G oder ein Filmgelenk im Übergangsbereich vom Clips zum Riegel des Sicherungselements 16 aufweist.

Zum Verrasten des Riegels mit dem gegenüberstehenden Clips 3, weist der Riegel des Sicherungselements 16 eine zum Clips 3 korrespondierende Öffnung 18 auf, die in der Sicherungsstellung II einen Kopf des Clips 3 übergreift und mittels eines nach außen vorstehenden hakenförmigen Vorsprungs 19 am Clipskopf K verrastbar ist.

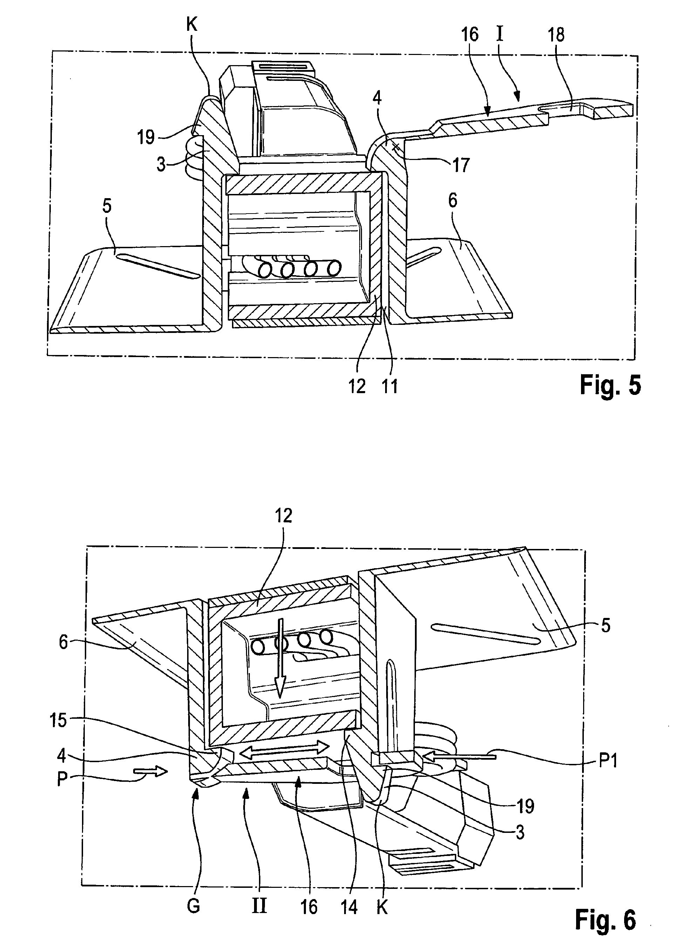

Über den Riegel des Sicherungselements 16 werden durch die Lage der Öffnung 18 zu dem Clips 3, die beiden Clipse 3 und 4 gegeneinander gezogen, wie die Pfeile P und P1 in Fig. 6 näher zeigen, so dass die hakenförmigen Vorsprünge 14, 15 der Clipse 3, 4 gegen das Bauteil 12 von oben drücken und diesen fest im Halter 12 eingespannt halten. Dies ist erforderlich, da die Kräfte gegen die Verclipsung wirken, wie beispielsweise das Gewicht, die Vibrationen und ein Nachlassen der Spannwirkung, beispielsweise durch Temperatureinwirkungen oder ein Setzverhalten.

## Patentansprüche

1. Befestigungsvorrichtung für ein Bauteil eines Kraftfahrzeugs, insb. für einen Sensor, der in einem Halter angeordnet ist und mittels Befestigungselementen gehalten wird, wobei zu beiden Seiten des Bauteils (12) als Befestigungselemente Clipse (3, 4) mit endseitig angeformten hakenförmigen Vorsprüngen (14, 15) randseitig am Halter (2) angeordnet sind, und mit einem Clips (4) ein Sicherungselement (16) verbunden ist, welches um eine Schwenkachse (17) eines Gelenks (G) von einer Öffnungsstellung (I) in eine Sicherungsstellung (II) verschwenkbar und auf dem gegenüberstehenden Clips (3) verrastbar ist, **dadurch gekennzeichnet, dass** die hakenförmigen Vorsprünge (14, 15) das Bauteil (12) seitlich übergreifen.

2. Befestigungsvorrichtung nach Anspruch 1, **dadurch gekennzeichnet, dass** das Sicherungselement (16) aus einem zungenförmigen Riegel besteht, welcher sich quer über das Bauteil (12) erstreckt und am Bauteil (12) anliegt und über das Gelenk (G) oder ein Filmgelenk um die Schwenkachse (17) in die Sicherungsstellung (II) auf den gegenüberstehenden Clips (3) verschwenkbar ist.

3. Befestigungsvorrichtung nach Anspruch 2, **dadurch gekennzeichnet, dass** der Riegel des Sicherungselements (16) eine mit einem Kopf des gegenüberstehenden Clips (3) korrespondierende Öffnung (18) aufweist, die in der Sicherungsstellung (II) den Clipskopf (K) übergreift und mittels eines nach aussen vorstehenden hakenförmigen Vorsprungs (19) am Kopf des Clips (3) verrastbar ist.

4. Befestigungsvorrichtung nach den Ansprüchen 2 oder 3, **dadurch gekennzeichnet, dass** die Clipse (3, 4) am oberen Rand von seitlichen Wandungen (7, 8) des Halters (2) angeordnet sind und die hakenförmigen Vorsprünge (14, 15) der Clipse (3, 4) nach innen weisend und gegenüberstehend angeordnet sind und das Bauteil (12) quer übergreifen, wobei der hakenförmige Vorsprung (19) am Clipskopf (K) zur Aufnahme des Riegels des Sicherungselements (16) in der Sicherungsstellung (II) am freien oberen Ende des Clips (3) angeordnet und nach aussen vorragend angeordnet ist.

5. Befestigungsvorrichtung nach den Ansprüchen 2, 3 oder 4, **dadurch gekennzeichnet, dass** der Riegel in der Sicherungsstellung (II) die beiden Clipse (3, 4) gegeneinander gespannt am Bauteil (12) haltend auf dem Clipskopf (K) befestigbar ist.

6. Befestigungsvorrichtung nach einem der vorhergehenden Ansprüche, **dadurch gekennzeichnet, dass** am Halter (2) mehrere Clipse (3, 4) zu beiden Seiten des Bauteils (12) angeordnet sind und die Clipse (3 oder 4) einen Riegel als Sicherungselement (16) aufweisen.

7. Befestigungsvorrichtung nach einem der vorhergehenden Ansprüche, **dadurch gekennzeichnet, dass** der Halter (2) seitliche mit dem Fahrzeug verbundene Bodenplatten (5, 6) aufweist an die sich aufrechte Seitenwände (7, 8) anschliessen, welche zwischen sich das Bauteil (12) aufnehmen und der Halter (2) an einem den Clipsen (3, 4) abgekehrten hinteren Ende (9) eine kastenförmige Aufnahme (14) aufweist, die das Bauteil (12) umgibt und am vorderen Ende des Halters (2) eine Einschuböffnung (11) vorgesehen ist und mit einem Längsabstand/ hierzu die beiden Clipse (3, 4) und das Sicherungselement (16) angeordnet sind.

## Claims

1. A mounting device for a component of a motor vehicle, particularly for a sensor, which is arranged in a holder and is held by means of mounting elements, wherein clips (3, 4) with hook-shaped projections (14, 15) integrally molded on the end side are arranged on both sides of the component (12) as mounting elements on the edge side of the holder (2), and a safety element (16) is connected with a clip (4), which can be swiveled about a swivel axis (17) of a hinge (G) from an opening position (I) into a safety position (II) and can be locked in place on the opposite clip (3), **characterized in that** the hook-shaped projections (14, 15) overlap the component (12) laterally.

2. A mounting device according to claim 1, **characterized in that** the safety element (16) consists of a tongue-shaped bar, which extends transversely over the component (12) and is in contact with the component (12) and can be swiveled via the hinge (G) or a film hinge about the swivel axis (17) into the safety position (II) on the opposite clip (3).

3. A mounting device according to claim 2, **characterized in that** the bar of the safety element (16) has an opening (18) corresponding to a head of the opposite clip (3), which opening overlaps the clip head in the safety position (II) and can be locked in place at the head of the clip (K) by means of a hook-shaped projection (19) protruding outwards.

4. A mounting device according to claims 2 or 3, **characterized in that** the clips (3, 4) are arranged on the upper edge of lateral walls (7, 8) of the holder (2) and the hook-shaped projections (14, 15) of the clips (3, 4) are arranged pointing inwards and opposite and overlap the component (12) transversely, wherein the hook-shaped projection (19) on the clip head (K) is arranged for accommodation of the bar of the safety element (16) in the safety position (II) on the free upper end of the clip (3) and is arranged protruding outwards.

5. A mounting device according to claims 2, 3 or 4, **characterized in that** the bar in the safety position (II) holding both of the clips (3, 4) taut on the component (12) can be mounted on the clip head (K).

6. A mounting device according one of the preceding claims, **characterized in that** several clips (3, 4) are arranged on the holder (2) on both sides of the component (12) and the clips (3 or 4) have a bar as safety element (16).

7. A mounting device according one of the preceding claims, **characterized in that** the holder (2) has base plates (5, 6) connected laterally with the motor vehicle, to which upright side walls (7, 8) are connected, which accommodate the component (12) between them and the holder (2) at a back end (9) facing away from the clips (3, 4) has a box-shaped accommodation (14), which surrounds the component (12) and on the front end of the holder (2) an insertion opening (11) is provided and at a longitudinal distance therefrom both clips (3, 4) and the safety element (16) are arranged.

## Revendications

1. Dispositif de fixation pour un composant d'un véhicule automobile, notamment pour un capteur, qui se trouve dans un support, et qui est maintenu à l'aide d'éléments de fixation, des clips (3, 4), avec des saillies en forme de crochets (14, 15) venues de matière aux extrémités, étant disposés, en tant qu'éléments de fixation, sur le bord du support (2) des deux côtés du composant (12), et un élément de sécurisation (16) étant relié à un clip (4), cet élément étant pivotant autour d'un axe de pivotement (17) d'une articulation (G), d'une position d'ouverture (I) vers une position de sécurisation (II) et pouvant être encliqueté sur le clip (3) situé en face, **caractérisé en ce que** les saillies en forme de crochets (14, 15) enserrent le composant (12) latéralement.

2. Dispositif de fixation selon la revendication 1, **caractérisé en ce que** l'élément de sécurisation (16) est constitué d'un verrou en forme de languette, qui s'étend transversalement au-dessus du composant (12) et s'appuie contre le composant (12) et peut pivoter, par l'intermédiaire de l'articulation (G) ou d'un film-charnière autour de l'axe de pivotement (17), vers la position de sécurisation (II) sur le clip (3) situé en face.

3. Dispositif de fixation selon la revendication 2, **caractérisé en ce que** le verrou de l'élément de sécurisation (16) présente une ouverture (18) correspondant à une tête du clip (3) situé en face, qui, dans la position de sécurisation (II), enserre la tête du clip (K) et peut être encliqueté, à l'aide d'une saillie en forme de crochet (19) dépassant vers l'extérieur, sur la tête du clip (3).

4. Dispositif de fixation selon les revendications 2 ou 3, **caractérisé en ce que** les clips (3, 4) se trouvent sur le bord supérieur de parois latérales (7, 8) du support (2) et les saillies en forme de crochets (14, 15) des clips (3, 4) sont orientées vers l'intérieur et se font face et enserrent transversalement le composant (12), la saillie en forme de crochet (19) se trouvant sur la tête de clip (K) pour le logement du verrou de l'élément de sécurisation (16) dans la position de sécurisation (II) à l'extrémité supérieure libre du clip (3) et est disposée de façon à dépasser vers l'extérieur.

5. Dispositif de fixation selon l'une des revendications 2, 3 ou 4, **caractérisé en ce que** le verrou peut être fixé dans la position de sécurisation (II), maintenant les deux clips (3, 4) serrés l'un contre l'autre sur le composant (12), sur la tête de clip (K).

6. Dispositif de fixation selon l'une des revendications précédentes, **caractérisé en ce que**, sur le support (2), se trouvent plusieurs clips (3, 4) des deux côtés du composant (12) et les clips (3 ou 4) comprennent un verrou en tant qu'élément de sécurisation (16).

7. Dispositif de fixation selon l'une des revendications précédentes, **caractérisé en ce que** le support (2) comprend des plaques de fond latérales (5, 6) reliées au véhicule, auxquelles se raccordent des parois latérales (7, 8) verticales, qui reçoivent entre elles le composant (12) et le support (2) comprend, à une extrémité (9) arrière opposée aux clips (3, 4), un logement (14) en forme de caisson, qui entoure le composant (12) et, à l'extrémité avant du support (2), une ouverture d'entrée (11) est prévue et les deux clips (3, 4) et l'élément de sécurisation (16) sont disposés à une certaine distance longitudinale de celle-ci.
